(19) **Europäisches Patentamt / European Patent Office / Office européen des brevets**

(11) **EP 3 671 465 B1**

(12) **FASCICULE DE BREVET EUROPEEN**

(45) Date de publication et mention
de la délivrance du brevet:
**11.08.2021 Bulletin 2021/32**

(51) Int Cl.:
***G06F 11/34*** *(2006.01)*

(21) Numéro de dépôt: **19219167.4**

(22) Date de dépôt: **20.12.2019**

(54) **PROCÉDÉ D'ANALYSE DE PERFORMANCES D'UNE APPLICATION LOGICIELLE SUR UNE GRAPPE DE SERVEURS PAR EXTRAPOLATION**

ANALYSEVERFAHREN DER LEISTUNGEN EINER SOFTWAREANWENDUNG IN EINER SERVERFARM DURCH EXTRAPOLATION

METHOD FOR ANALYSING THE PERFORMANCE OF A SOFTWARE APPLICATION ON A CLUSTER OF SERVERS BY EXTRAPOLATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2018 FR 1873784**
**24.09.2019 FR 1910554**

(43) Date de publication de la demande:
**24.06.2020 Bulletin 2020/26**

(73) Titulaire: **Bull SAS**
**78340 Les Clayes-sous-Bois (FR)**

(72) Inventeurs:
• **TAGUELMIMT, Noureddine**
**78340 Les Clayes-sous-Bois (FR)**
• **JAURE, Stephan**
**78340 Les Clayes-sous-Bois (FR)**

(74) Mandataire: **Camus, Olivier Jean-Claude**
**Cabinet Camus Lebkiri**
**25, rue de Maubeuge**
**75009 Paris (FR)**

(56) Documents cités:
• **KERBYSON D J: "A Look at Application Performance Sensitivity to the Bandwidth and Latency of Infiniband Networks", PROCEEDINGS. 20TH INTERNATIONAL PARALLEL AND DISTRIBUTED PROCESSING SYMPOSIUM (IEEE CAT. NO.06TH8860), IEEE PISCATAWAY, NJ, USA, 25 avril 2006 (2006-04-25), pages 1-7, XP010920516, DOI: 10.1109/IPDPS.2006.1639566 ISBN: 978-1-4244-0054-6**
• **MARTIN SCHULZ ET AL: "On the Performance of Transparent MPI Piggyback Messages", 7 septembre 2008 (2008-09-07), INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 194 - 201, XP019105791, ISBN: 978-3-642-17318-9 * le document en entier * * abrégé * * page 195, ligne 13 - ligne 15 * * page 195, ligne 20 - ligne 22 * * page 196, ligne 7 - ligne 10 ***

**Description**

La présente invention, définie par l'objet des revendications indépendantes 1 et 10, concerne un procédé d'analyse, par extrapolation, de performances d'une application logicielle par son exécution parallèle sur plusieurs nœuds de calcul d'une grappe de serveurs de référence. Elle concerne également un programme d'ordinateur comprenant des instructions pour l'exécution d'un tel procédé.

Dans ce contexte, il s'agit de prédire par extrapolation les performances de l'application logicielle sur une grappe de serveurs cible, c'est-à-dire un calculateur à haute performance ou supercalculateur (i.e. un calculateur du domaine du HPC, de l'anglais « High Performance Computing »), dont l'architecture et le dimensionnement sont à définir par comparaison (de l'anglais « benchmark ») avec la grappe de serveurs de référence qui peut également être qualifiée de supercalculateur de benchmark.

Le HPC ou calcul à haute performance touche de plus en plus de domaines scientifiques tels que l'environnement, la météorologie et la physique. Dans ces domaines, le besoin de résoudre des problèmes toujours plus complexes, que ce soit au niveau des modèles ou de leur résolution, entraîne une forte demande de capacité de calcul sur des grappes de serveurs.

Ces grappes de serveurs comportent les nœuds de calcul précités, des nœuds de stockage et au moins un réseau d'interconnexion des nœuds de calcul et de stockage entre eux pour l'échange de messages selon un protocole prédéterminé de passage de messages. Ce réseau est à transmission très rapide des messages pour une optimisation des calculs parallèles. Il est généralement qualifié de « Interconnect » ou « InfiniBand », ces terminologies incluant différentes technologies.

L'une des grandes difficultés de la conception d'une grappe de serveurs est son dimensionnement. En effet, dans le cadre d'un appel d'offres par exemple, celui-ci est généralement accompagné d'un ensemble d'applications scientifiques, donnant suite à une campagne d'analyse, de test et de projection des performances. L'objectif final de cette campagne est de dimensionner la grappe de serveurs cible et de définir son architecture. Cela se fait en deux étapes : une étape d'optimisation de la performance des applications scientifiques et une étape d'optimisation du prix du système proposé.

L'un des problèmes majeurs des analyses de performances des applications logicielles scientifiques est l'indisponibilité de la grappe de serveurs cible, c'est-à-dire, celle qui sera proposée au porteur de l'appel d'offres. Ceci s'explique essentiellement par deux raisons. D'une part, avec la variété des architectures et des systèmes de calcul, il est impossible d'avoir à sa disposition l'ensemble des modèles existants. D'autre part, la grappe de serveurs cible peut simplement être en cours de développement et n'être mise sur le marché que des mois voire des années après la date de la proposition de l'offre. Les caractéristiques principales de cette grappe de serveurs cible peuvent néanmoins être communiquées par leurs constructeurs en amont. On a alors recours à la simulation par extrapolation de la grappe de serveurs cible à partir de la grappe de serveurs de référence.

Cette simulation est généralement menée par des équipes dédiées qui utilisent des modèles plus ou moins complexes reposant essentiellement sur une analyse des sensibilités de l'exécution parallèle des applications logicielles à tester aux différentes caractéristiques possibles de la grappe de serveurs cible. Ces caractéristiques comportent la fréquence des processeurs en GHz, la bande passante de la mémoire vive attachée localement à ces processeurs en Go/s et la bande passante du réseau d'interconnexion en Go/s.

Dans ce domaine d'analyse par extrapolation, plusieurs approches existent parmi lesquelles principalement :

- faire varier la fréquence des processeurs du supercalculateur de benchmark via des paramètres système, pour analyser la sensibilité de l'application logicielle à la fréquence des processeurs qui l'exécutent,

- étudier la couche de communication MPI (de l'anglais « Message Passing Interface ») du protocole de passage de message employé lors de l'exécution de l'application logicielle, pour analyser la sensibilité de l'application à la bande passante du réseau d'interconnexion du supercalculateur de benchmark,

- faire varier le placement des fils d'instructions de l'application logicielle lors de son exécution en jouant sur le nombre nœuds de calcul sollicités et le nombre de cœurs de calcul disponibles par nœud de calcul, pour analyser la sensibilité de l'application à la bande passante du réseau d'interconnexion du supercalculateur de benchmark en simulant ainsi une variation de la bande passante du réseau d'interconnexion disponible par processus.

KERBYSON D J: "A Look at Application Performance Sensitivity to the Bandwidth and Latency of Infiniband Networks" divulgue une analyse de l'impact sur les performances des applications des réseaux Infiniband, avec différentes caractéristiques de bande passante et de latence à l'aide de modèles de performances.

MARTIN SCHULZ ET AL: "On the Performance of Transparent MPI Piggyback Messages" décrit méthodes d'ajout de données piggyback à la payload des applications MPI.

Dans ce contexte, l'invention s'applique plus particulièrement à un procédé d'analyse de performances d'une application logicielle par son exécution parallèle sur plusieurs nœuds de calcul d'une grappe de serveurs de référence comportant en outre plusieurs nœuds de stockage et au moins un réseau d'interconnexion des nœuds de calcul et de stockage entre eux pour l'échange de messages selon un protocole prédéterminé de passage de messages, le procédé comportant :

- une première exécution de l'application logicielle par la grappe de serveurs, impliquant des échanges de données utiles à son exécution entre les nœuds de calcul et de stockage de la grappe de serveurs réalisés par le réseau d'interconnexion selon le protocole prédéterminé en encapsulant ces données utiles dans les messages dont la taille est prédéterminée ;
- une deuxième exécution de l'application logicielle par la grappe de serveurs, impliquant les mêmes échanges de données utiles entre les mêmes nœuds de calcul et de stockage de la grappe de serveurs réalisés par le même réseau d'interconnexion selon le même protocole prédéterminé ; et
- une extrapolation des performances de l'application logicielle sur la base d'au moins l'une des deux exécutions.

L'analyse de performances de l'application logicielle par extrapolation comporte ainsi une évaluation de sa sensibilité aux variations de la fréquence des processeurs qui est très simple à mettre en œuvre et ne pose généralement pas de problème. Celle-ci a l'intérêt de ne pas engendrer d'effets non linéaires importants sur les autres paramètres de sensibilité, ce qui constitue une propriété très intéressante en analyse par extrapolation.

L'analyse de performances de l'application logicielle par extrapolation comporte en outre avantageusement une évaluation de sa sensibilité aux variations de la bande passante du réseau d'interconnexion. Seules les deux dernières solutions le permettent. Mais cela ne se fait pas simplement et sans effets indésirables sur la simulation. En particulier, les approches par extrapolation de trace, telles que par exemple enseignées dans l'article de Carrington et al, intitulé « Characterizing large-scale HPC applications through trace extrapolation », publié dans Parallel Processing Letters @World Scientific, volume 23, n° 4 (2013), sont complexes à mettre en œuvre et engendrent des non linéarités en impactant d'autres caractéristiques. Il en est de même des approches procédant par une étude des performances de la couche de communication MPI par projection, telles que par exemple enseignées dans l'article de Sharkawi et al, intitulé « SWAPP: a framework for performance projections of HPC applications using benchmarks », publié dans IEEE 26th International Parallel and Distributed Processing Symposium Workshops & PhD Forum (Proceedings of) en 2012. Plus généralement, il est difficile de simuler des variations de bande passante sans agir physiquement sur le réseau d'interconnexion, ses commutateurs ou ses interfaces d'accès. Ces actions impliquent des arrêts fréquents du supercalculateur de benchmark et un temps d'intervention conséquent.

Il peut ainsi être souhaité de prévoir un procédé d'analyse de performances d'une application logicielle par extrapolation qui permette de s'affranchir d'au moins une partie des problèmes et contraintes précités.

Il est donc proposé un procédé d'analyse de performances d'une application logicielle par son exécution parallèle sur plusieurs nœuds de calcul d'une grappe de serveurs de référence comportant en outre plusieurs nœuds de stockage et au moins un réseau d'interconnexion des nœuds de calcul et de stockage entre eux pour l'échange de messages selon un protocole prédéterminé de passage de messages, le procédé comportant :

- une première exécution de l'application logicielle par la grappe de serveurs, impliquant des échanges de données utiles à son exécution entre les nœuds de calcul et de stockage de la grappe de serveurs réalisés par le réseau d'interconnexion selon le protocole prédéterminé en encapsulant ces données utiles dans les messages dont la taille est prédéterminée ;

- une deuxième exécution de l'application logicielle par la grappe de serveurs, impliquant les mêmes échanges de données utiles entre les mêmes nœuds de calcul et de stockage de la grappe de serveurs réalisés par le même réseau d'interconnexion selon le même protocole prédéterminé ;

- une extrapolation des performances de l'application logicielle sur la base d'au moins l'une des deux exécutions ;

caractérisé en ce que :

- la taille prédéterminée des messages échangés lors de la deuxième exécution diffère de celle des messages échangés lors de la première exécution alors que les données utiles échangées sont les mêmes ; et

- l'extrapolation des performances de l'application logicielle comporte une simulation de variation d'une bande passante du réseau d'interconnexion basée sur la différence de taille prédéterminée des messages échangés lors de la première et de la deuxième exécution.

Ainsi, en jouant très simplement sur la taille des messages échangés selon un protocole de type MPI, on simule astucieusement plusieurs bandes passantes possibles du réseau d'interconnexion sans agir physiquement sur celui-ci. L'analyse des performances d'une application logicielle HPC par extrapolation s'en trouve facilitée au moins sur cet aspect de bande passante. Elle n'engendre ni complexité, ni effets indésirables de non linéarité.

De façon optionnelle, la deuxième exécution de l'application logicielle par la grappe de serveurs ne se distingue de la première exécution que par la taille des messages échangés selon le protocole prédéterminé.

De façon optionnelle également, la taille prédéterminée des messages échangés lors de la deuxième exécution diffère de celle des messages échangés lors de la première exécution uniquement par ajout ou suppression de données dans ces messages, dites données de remplissage, inutiles à l'exécution de l'application.

De façon optionnelle également, la simulation de variation de bande passante du réseau d'interconnexion s'exécute par application de la relation suivante :

$$B_2 = B_1 \cdot \frac{T_1}{T_2},$$

où $T_1$ est la taille prédéterminée des messages échangés selon le protocole prédéterminé lors de la première exécution de l'application logicielle, $T_2$ est la taille prédéterminée des messages échangés selon le protocole prédéterminé lors de la deuxième exécution de l'application logicielle, $B_1$ est une bande passante apparente du réseau d'interconnexion de la grappe de serveurs de référence et $B_2$ est une autre bande passante apparente du même réseau d'interconnexion résultant de la variation de bande passante simulée du réseau d'interconnexion.

De façon optionnelle également :

- lors de l'une des première et deuxième exécutions de l'application logicielle, chaque message comporte N octets de données utiles transmises d'un nœud de calcul émetteur à un nœud de calcul destinataire ;

- lors de l'autre des première et deuxième exécutions de l'application logicielle, chaque message comporte N+N' octets de données dont N octets de données utiles transmises d'un nœud de calcul émetteur à un nœud de calcul destinataire et N' octets de données supplémentaires de remplissage transmises selon une couche de communication du protocole prédéterminé de passage de messages mais non fournies au nœud de calcul destinataire et non visible par l'application logicielle en cours d'exécution.

De façon optionnelle également, la taille prédéterminée des messages est modifiée d'une exécution à l'autre de l'application logicielle par adaptation d'un composant logiciel de la couche de communication du protocole prédéterminé de passage de messages, cette couche de communication étant destinée à être appelée lors de chaque exécution de l'application logicielle chaque fois qu'un message doit être envoyé dans le réseau d'interconnexion.

De façon optionnelle également, la taille prédéterminée des messages est modifiée d'une exécution à l'autre de l'application logicielle par insertion d'un appel à une bibliothèque logicielle d'encapsulation de service de passage de messages dédiée à cette modification de taille chaque fois que l'exécution de l'application logicielle implique un appel de primitive de demande d'envoi de message de la couche de communication du protocole prédéterminé de passage de messages, l'appel de primitive étant alors réalisé par la bibliothèque logicielle d'encapsulation appelée.

De façon optionnelle également, la taille prédéterminée des messages est modifiée d'une exécution à l'autre de l'application logicielle par programmation de cette modification dans au moins une bibliothèque logicielle d'interfaçage avec au moins un pilote du réseau d'interconnexion, ladite bibliothèque logicielle d'interfaçage étant appelée par une primitive de demande d'envoi de message de la couche de communication du protocole prédéterminé de passage de messages elle-même appelée par l'exécution de l'application logicielle chaque fois qu'un message doit être envoyé.

De façon optionnelle également, le protocole prédéterminé de passage de messages est un protocole de type MPI.

Il est également proposé un programme d'ordinateur, téléchargeable depuis un réseau de communication et/ou enregistré sur un support lisible par ordinateur et/ou exécutable par un processeur, comprenant des instructions pour l'exécution des étapes d'un procédé d'analyse de performances d'une application logicielle selon l'invention, lorsque ledit programme est exécuté sur un ordinateur.

L'invention sera mieux comprise à l'aide de la description qui va suivre, donnée uniquement à titre d'exemple et faite en se référant aux dessins annexés dans lesquels :

[Fig.1] la figure 1 représente schématiquement la structure générale d'un supercalculateur de benchmark sur lequel peut être mis en oeuvre un procédé d'analyse par extrapolation selon l'invention,

[Fig.2] la figure 2 illustre les étapes successives d'un procédé d'analyse par extrapolation selon un mode de réalisation de l'invention,

[Fig.3] la figure 3 représente schématiquement une succession de couches logicielles programmées pour la mise en oeuvre d'échanges de messages dans le supercalculateur de benchmark de la figure 1,

[Fig.4] la figure 4 représente schématiquement une adaptation possible de la succession de couches logicielles de la figure 3 pour l'exécution du procédé de la figure 2, et

[Fig.5] la figure 5 représente schématiquement une autre adaptation possible de la succession de couches logicielles de la figure 3 pour l'exécution du procédé de la figure 2.

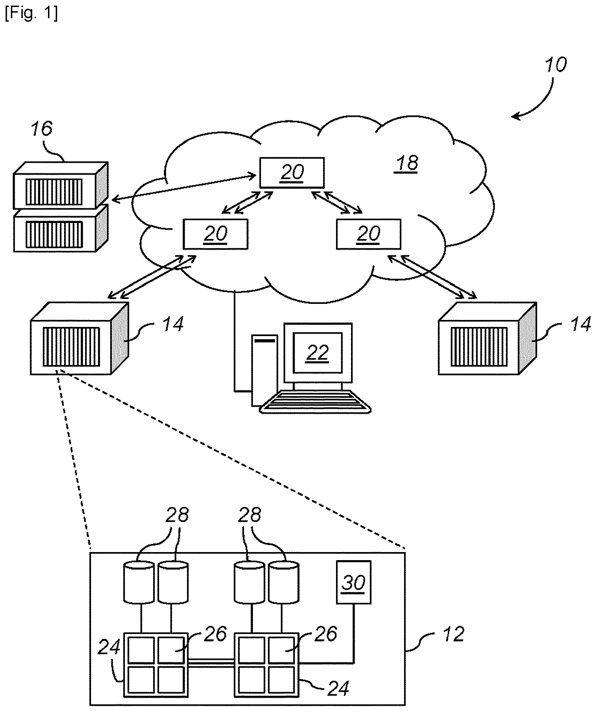

La grappe de serveurs de référence 10, ou supercalculateur de benchmark 10, représentée schématiquement sur la figure 1, comporte de multiples nœuds de calcul 12 répartis dans des baies informatiques 14, plusieurs nœuds de stockage 16 et au moins un réseau 18 d'interconnexion des nœuds de calcul et de stockage entre eux pour l'échange de messages selon un protocole prédéterminé de passage de messages, par exemple un protocole de type MPI. Le réseau d'interconnexion 18 comporte de façon connue en soi des commutateurs 20 organisés pour optimiser les échanges de données dans ce supercalculateur de benchmark 10. Une console d'administration 22 fait également partie du supercalculateur de benchmark 10 pour l'exécution de programmes d'administration générale, notamment pour permettre d'intervenir sur certains paramètres de fonctionnement, dont celui du protocole MPI comme cela sera vu ultérieurement.

Un seul nœud de calcul 12 est illustré sur la figure 1 mais ils peuvent être tous conçus selon la même architecture. Il comporte plusieurs processeurs multicœurs 24 à quatre cœurs de calcul 26 chacun ainsi que plusieurs mémoires locales 28, notamment des mémoires RAM. Il comporte en outre une interface 30 d'entrée/sortie de messages destinés à transiter dans le réseau d'interconnexion 18 selon le protocole MPI. Cet exemple de nœud de calcul est donné à titre purement illustratif, sachant que de multiples architectures sont possibles.

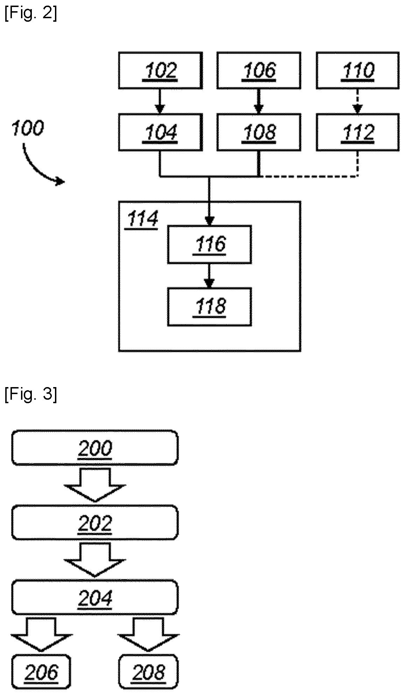

A partir de la console d'administration 22, il est possible de déployer l'exécution parallèle d'une application logicielle quelconque par le supercalculateur de benchmark 10 et d'en analyser les performances. Il est en outre possible d'apporter quelques modifications au supercalculateur de benchmark 10, par simulation ou intervention sur certains de ces éléments, par exemple en termes de fréquence des processeurs et de bandes passantes entre processeurs et mémoires vives associées ou dans le réseau d'interconnexion 18, pour simuler le fonctionnement d'un supercalculateur cible à partir du supercalculateur de benchmark 10. L'analyse par extrapolation se fait à l'aide d'un modèle d'extrapolation par exemple stocké en mémoire dans la console d'administration 22. Celle-ci est alors apte à exécuter les étapes successives du procédé 100 d'analyse par extrapolation illustré sur la figure 2 en exécutant une succession d'instructions de programme d'ordinateur.

Au cours d'une étape 102 de préparation d'une première exécution de l'application logicielle considérée, la couche de communication du protocole MPI est paramétrée depuis la console d'administration 22 pour que tous les messages échangés au cours de l'exécution à venir présentent une taille $T_1$.

Au cours d'une étape suivante 104, la première exécution de l'application logicielle est lancée depuis la console d'administration 22. Elle implique des échanges de données utiles à son exécution entre les nœuds de calcul 12 et de stockage 16 du supercalculateur de benchmark 10. Ces échanges sont réalisés par le réseau d'interconnexion 18 selon le protocole MPI, plus précisément selon sa couche de communication, en encapsulant ces données utiles dans les messages de taille $T_1$. Les performances de l'application logicielle obtenues par cette première exécution sont mesurées conformément à certains paramètres prédéterminés.

Au cours d'une étape 106 de préparation d'une deuxième exécution de l'application logicielle considérée, la couche de communication du protocole MPI est paramétrée depuis la console d'administration 22 pour que tous les messages échangés au cours de l'exécution à venir présentent une taille $T_2$ différente de $T_1$ alors que les données utiles à échanger et à encapsuler dans ces messages sont les mêmes.

Au cours d'une étape suivante 108, la deuxième exécution de l'application logicielle est lancée depuis la console d'administration 22. Elle implique les mêmes échanges de données utiles à son exécution entre les nœuds de calcul 12 et de stockage 16 du supercalculateur de benchmark 10. Ces échanges sont réalisés à l'identique par le réseau d'interconnexion 18 selon le protocole MPI, plus précisément selon sa couche de communication, en encapsulant ces données utiles dans les messages de taille $T_2$. Les performances de l'application logicielle obtenues par cette deuxième exécution sont mesurées conformément aux paramètres prédéterminés. Avantageusement, la deuxième exécution de l'application logicielle par le supercalculateur de benchmark 10 ne se distingue de la première exécution que par la taille des messages échangés selon la couche de communication du protocole MPI. Plus précisément, la taille $T_2$ des messages échangés lors de la deuxième exécution diffère de celle ($T_1$) des messages échangés lors de la première exécution uniquement par ajout ou suppression de données de remplissage dans ces messages. Ces données de remplissage sont inutiles à l'exécution de l'application logicielle et ne servent qu'à faire varier, de $T_1$ à $T_2$ ou de $T_2$ à $T_1$, la taille des messages. Le cas échéant, elles sont incluses dans les messages à l'encapsulation selon la couche de communication du protocole MPI et sont extraites des messages à la désencapsulation selon cette même couche de communication, de sorte qu'elles sont totalement invisibles de l'application logicielle elle-même et de son exécution parallèle par les différents nœuds de calcul 12. Ces opérations sont réalisées dans les interfaces d'entrée/sortie de messages des différents éléments du supercalculateur de benchmark 10, notamment dans les interfaces 30 des nœuds de calcul.

Si l'on choisit de prendre comme référence la première exécution de l'application logicielle en considérant $T_1$ comme la taille nominale des messages sans données de remplissage, alors la taille $T_2$ des messages échangés lors de la deuxième exécution ne peut différer de celle ($T_1$) des messages échangés lors de la première exécution que par ajout de données de remplissage pour simuler une réduction de bande passante entre les première et deuxième exécutions. En variante, on pourrait choisir de prendre comme référence la deuxième exécution de l'application logicielle en considérant $T_2$ comme la taille nominale des messages sans données de remplissage. Dans ce cas, la taille $T_1$ des messages échangés lors de la première exécution différerait de celle ($T_2$) des messages échangés lors de la deuxième exécution uniquement par ajout de données de remplissage pour simuler une réduction de bande passante entre les deuxième et première exécutions. En variante également, les deux exécutions pourraient se faire avec des quantités différentes de données de remplissage, bien évidemment sans altération des données utiles, pour simuler des bandes passantes différentes sous-optimales.

Ainsi tout se passe comme si, toutes choses identiques par ailleurs, la bande passante du réseau d'interconnexion 18 avait varié entre les première et deuxième exécutions de l'application logicielle. Si l'on note $B_1$ la bande passante apparente du réseau d'interconnexion 18 lors de la première exécution de l'application logicielle et $B_2$ la bande passante apparente lors de la deuxième exécution, la relation suivante peut être établie entre $B_1$ et $B_2$ :

[Math. 1]

$$B_2 = B_1 \cdot \frac{T_1}{T_2}.$$

De façon optionnelle et éventuellement répétée, au cours d'au moins une étape 110 de préparation d'au moins une autre exécution de l'application logicielle considérée, au moins un autre paramètre du supercalculateur de benchmark 10 est modifié depuis la console d'administration 22 ou par intervention physique : par exemple la fréquence d'horloge des processeurs, la bande passante locale d'accès aux mémoires vives associées aux processeurs, etc.

Au cours d'une étape 112 exécutée après chaque étape optionnelle 110, une autre exécution de l'application logicielle est lancée depuis la console d'administration 22. Elle implique des échanges de données utiles à son exécution entre les nœuds de calcul 12 et de stockage 16 du supercalculateur de benchmark 10. Les performances de l'application logicielle obtenues par chaque autre exécution sont mesurées conformément aux paramètres prédéterminés.

Les étapes 104, 108 et éventuellement 112 sont suivies d'une phase 114 d'analyse par extrapolation des performances que l'application logicielle considérée pourrait présenter sur le supercalculateur cible tel que visé par les modifications de paramètres réalisées au cours des étapes 102, 104 et éventuellement 110.

Au cours d'une première étape 116 de cette phase 114, les résultats des étapes 104, 108 et éventuellement 112 sont récupérés et analysés. En particulier, le calcul des bandes passantes $B_1$ et $B_2$ peut être réalisé à cette étape.

Au cours d'une étape suivante 118, le modèle d'extrapolation stocké en mémoire est appliqué. Un exemple de modèle va maintenant être présenté. Il est basé sur une vue macroscopique des différents comportements de l'application logicielle et de leur dépendance des caractéristiques du supercalculateur cible considéré : principalement les caractéristiques des processeurs (nombre de cœurs, jeu d'instructions, fréquence, bande passante des accès à la mémoire locale) et du réseau d'interconnexion (latence et bande passante), mais également les performances des nœuds de stockage et du système de fichiers.

Ainsi, il peut être considéré que pour toute application logicielle analysée, le temps d'exécution des différentes tâches peut se décomposer en trois parties :

- le temps de communication, incluant la part de temps d'exécution gouvernée par l'application du protocole MPI et l'utilisation des composants d'interfaces d'entrée/sortie,

- le temps CPU, incluant la part de temps d'exécution gouvernée par la fréquence d'horloge des processeurs, et

- temps de mémoire, incluant la part de temps d'exécution gouvernée par les performances en mémoire principale.

Il en résulte, par exemple, de modèle d'extrapolation en trois parties suivant :

[Math. 2]

$$\frac{T(f, BW, IB)}{T_{ref}} = \alpha_{MPI+IO}\left(\eta_{coll} + (1 - \eta_{coll})\frac{IB_{ref}}{IB}\right) + \alpha_{CPU} \cdot \frac{f_{ref}}{f}\left(1 - \kappa\left(1 - \frac{Nop_{ref}}{Nop}\right)\right)$$

$$+ \alpha_{BW} \cdot \frac{BW_{ref}}{BW(f)}.$$

Dans ce modèle, $T(f,BW,IB)$ est le temps d'exécution extrapolé sur le supercalculateur cible et $T_{ref}$ est le temps d'exécution sur le supercalculateur de benchmark 10 avec ses propres paramètres. En outre, $f$ est la fréquence d'horloge des processeurs du supercalculateur cible, $f_{ref}$ est la fréquence d'horloge des processeurs du supercalculateur de benchmark, $BW$ est la bande passante d'accès à la mémoire locale de chaque cœur de calcul du supercalculateur cible, $BW_{ref}$ est la bande passante d'accès à la mémoire locale de chaque cœur de calcul du supercalculateur de référence, $IB$ est la bande passante du réseau d'interconnexion du supercalculateur cible, $IB_{ref}$ est la bande passante du réseau d'interconnexion du supercalculateur de référence, $Nop$ est le nombre de flops par cycle.

Enfin, les termes en caractères grecs $\alpha_{MPI+IO}$, $\alpha_{CPU}$, $\alpha_{BW}$, $\eta_{coll}$ et $\kappa$ sont des coefficients qui caractérisent l'exécution de l'application logicielle dans une configuration spécifique. Leur détermination est empirique et à la portée de l'homme du métier.

Par exemple, $\alpha_{MPI+IO}$ est un coefficient déterminable par mesure qui est relatif à la part de code dépendant des communications MPI. Cette information est fournie par une exécution unique de l'application logicielle équipée d'une bibliothèque logicielle de profilage qui intercepte et mesure temporellement les appels API (de l'anglais «Application Programming Interface ») pertinents.

Par exemple également, $\alpha_{CPU}$ est un coefficient déterminable par mesure qui est relatif à la part de code dépendant de la fréquence d'horloge CPU. Son calcul peut être résolu en exécutant l'application logicielle sous plusieurs fréquences d'horloge des nœuds de calcul.

Par exemple également, $\alpha_{BW}$ est un coefficient déterminable par mesure qui est relatif à la part de code dépendant de la bande passante des accès CPU à la mémoire locale. Son calcul peut être résolu en exécutant l'application logicielle sous plusieurs bandes passantes $BW$ simulées, notamment en faisant varier le nombre de cœurs de calcul activés dans chaque processeur de chaque nœud de calcul selon différents modes possibles : par exemple un mode « compact » selon lequel tous les processus alloués à un processeur sont liés à un même connecteur de ce processeur, ou un mode « scatter » selon lequel les processus alloués à un processeur sont répartis entre les deux connecteurs de ce processeur (dans ce cas la bande passante est doublée).

Par exemple également, $\eta_{coll}$ est un coefficient déterminable par mesure qui est relatif au ratio d'opérations de communication collectives par rapport à l'ensemble des opérations de communication. C'est un ratio calculé en prenant le temps d'exécution des opérations collectives divisé par le temps total des opérations de communication collectives et point à point. Par « opérations collectives » on entend des opérations impliquant l'ensemble des processus parallèles d'un groupe de processus, telles que des opérations de réduction (i.e. le fait de fournir une unique valeur en sortie à partir d'une pluralité de valeurs en entrée, comme le calcul d'un maximum par exemple), de diffusion (de l'anglais « broadcast », pour l'envoi d'une valeur de processus à tout un groupe d'autres processus) ou une combinaison de ces types d'opérations. Par « opérations point à point » on entend au contraire des opérations n'impliquant que deux processus, l'un étant émetteur, l'autre récepteur. Pour simplifier le calcul de ce ratio, on peut faire l'hypothèse que le temps d'exécution des opérations collectives est indépendant de la bande passante du système de communication, ce qui se vérifie dans la plupart des cas compte tenu de la très petite taille des messages d'opérations collectives. Ce coefficient peut être mesuré à l'aide de profils d'applications qui permettent de déterminer le temps d'exécution de chaque type d'opération de communication, collective ou point à point.

Par exemple également, $\kappa$ est un coefficient déterminable par mesure qui est relatif à la sensibilité du temps d'exécution à la vectorisation. Il est généralement déterminé en utilisant différente versions d'une même application compilée avec différents niveaux de jeux d'instructions et en regardant l'effet de chaque jeu d'instructions sur la performance de l'application.

En exécutant par exemple l'application logicielle dans la configuration normale non simulée du supercalculateur de benchmark 10 à l'étape 104, c'est-à-dire en échangeant selon le protocole MPI uniquement les données utiles à cette exécution sans ajout de données de remplissage, on peut remplacer $IB_{ref}$ par $B_1$ et $IB$ par $B_2$ dans le modèle d'extrapolation. Il en résulte que l'extrapolation des performances de l'application logicielle comporte bien une simulation de variation d'une bande passante du réseau d'interconnexion 18 basée sur la différence de taille prédéterminée des messages échangés lors des deux exécutions 104 et 108.

Plus généralement, lors de l'une des première et deuxième exécutions 104 et 108 de l'application logicielle, chaque message comporte N octets de données utiles transmises d'un nœud de calcul émetteur à un nœud de calcul destinataire, alors que lors de l'autre des première et deuxième exécutions de l'application logicielle, chaque message comporte N+N' octets de données dont N octets de données utiles transmises d'un nœud de calcul émetteur à un nœud de calcul destinataire et N' octets de données supplémentaires de remplissage ajoutées dans la couche de communication du protocole MPI mais non fournies au nœud de calcul destinataire et non visibles par l'application logicielle en cours d'exécution. Tout se passe alors comme si le débit du réseau d'interconnexion avait varié d'un facteur N/(N+N').

Les figures 3, 4 et 5 illustrent comment concrètement le protocole MPI peut simuler la variation de bande passante du réseau d'interconnexion 18 de façon transparente pour l'exécution de l'application logicielle considérée.

La figure 3 illustre les couches logicielles successives habituellement sollicitées lors d'échanges de données selon le protocole MPI.

La couche supérieure 200 est celle dans laquelle s'exécute l'application logicielle considérée. Pour chaque émission ou réception de données utiles à son exécution elle fait appel à la couche de communication du protocole MPI. Cette couche de communication comporte une première sous-couche 202 de « Front End » et une deuxième sous-couche 204 de fabrique MPI ou « Back End ». La première sous-couche 202 comporte des primitives de demande d'envoi de message destinées à être appelées par l'application logicielle lors de son exécution. La deuxième sous-couche 204 comporte au moins une bibliothèque logicielle d'interfaçage avec au moins un pilote du réseau d'interconnexion 18. La couche inférieure du protocole MPI est celle des pilotes, deux étant représentés dans la figure 3 sous les références 206 et 208.

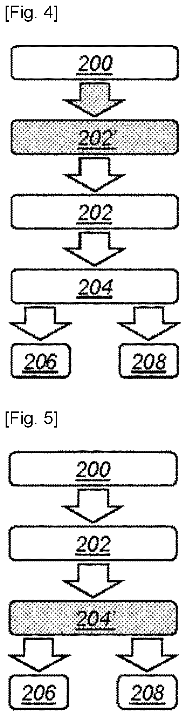

Ainsi, comme illustré en grisé sur les figures 4 et 5, la taille des messages échangés par exécution de l'application logicielle considérée est avantageusement modifiée d'une exécution à l'autre par adaptation d'un composant logiciel de la couche de communication 202, 204 du protocole MPI. Cela présente l'avantage d'opérer cette modification de façon totalement transparente pour l'application logicielle.

Plus précisément, selon un premier mode de réalisation possible illustré sur la figure 4, une couche 202' comportant une bibliothèque logicielle d'encapsulation de service de passage de messages, dédiée à la modification de taille des messages chaque fois que l'exécution de l'application logicielle implique un appel de primitive de la couche 202, est insérée entre la couche 200 et la couche 202. De cette façon les appels de primitives lancés depuis la couche 200 sont interceptés et interprétés par la couche 202' comme des appels à la bibliothèque logicielle d'encapsulation, pouvant être qualifiée de « wrapper MPI », chaque appel de primitive de la couche 202 étant alors réalisé par la bibliothèque logicielle d'encapsulation appelée.

Il convient cependant de noter que cette implémentation risque de nécessiter des copies dans des mémoires tampons intermédiaires, ce qui peut fausser les résultats. Il est possible toutefois de corriger cela en mesurant le temps passé spécifiquement dans ces copies.

Pour éviter cela, selon un deuxième mode de réalisation possible illustré sur la figure 5, la taille prédéterminée des messages est modifiée d'une exécution à l'autre de l'application logicielle par programmation de cette modification dans la ou les bibliothèque(s) logicielle(s) d'interfaçage de la couche 204 qui est alors modifiée en 204'. Cette modification s'opère donc lorsqu'une bibliothèque logicielle d'interfaçage de la couche 204' est appelée par une primitive de demande d'envoi de message de la couche 202 elle-même appelée par l'exécution de l'application logicielle de la couche 200 chaque fois qu'un message doit être envoyé.

Il apparaît clairement qu'un procédé d'analyse par extrapolation tel que celui décrit précédemment permet astucieusement de simuler simplement et sans effets indésirables de non linéarité plusieurs bandes passantes de réseau d'interconnexion sans agir physiquement sur celui-ci, lesquelles peuvent alors être reportées dans un modèle d'extrapolation. Il va de soi que les effets techniques avantageux de la présente invention sont indépendants du choix du modèle d'extrapolation à partir du moment où ce dernier exploite des données issues d'une variation, simulée ou imposée physiquement, de la bande passante du réseau d'interconnexion. Réciproquement, le modèle d'extrapolation décrit précédemment présente des avantages et effets avantageux indépendants de l'objet principal de la présente invention.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

## Revendications

1. Procédé (100) d'analyse de performances d'une application logicielle par son exécution parallèle sur plusieurs nœuds de calcul (12) d'une grappe de serveurs de référence (10) comportant en outre plusieurs nœuds de stockage (16) et au moins un réseau (18) d'interconnexion des nœuds de calcul (12) et de stockage (16) entre eux pour l'échange de messages selon un protocole prédéterminé de passage de messages, le procédé comportant :

- une première exécution (104) de l'application logicielle par la grappe de serveurs (10), impliquant des échanges de données utiles à son exécution entre les nœuds de calcul (12) et de stockage (16) de la grappe de serveurs (10) réalisés par le réseau d'interconnexion (18) selon le protocole prédéterminé en encapsulant ces données utiles dans les messages dont la taille est prédéterminée ;
- une deuxième exécution (108) de l'application logicielle par la grappe de serveurs (10), impliquant les mêmes échanges de données utiles entre les mêmes nœuds de calcul (12) et de stockage (16) de la grappe de serveurs (10) réalisés par le même réseau d'interconnexion (18) selon le même protocole prédéterminé ;
- une extrapolation (114) des performances de l'application logicielle sur la base d'au moins l'une des deux exécutions ;

**caractérisé en ce que** :

- la taille prédéterminée des messages échangés lors de la deuxième exécution (108) diffère de celle des messages échangés lors de la première exécution (104) alors que les données utiles échangées sont les mêmes ; et
- l'extrapolation (114) des performances de l'application logicielle comporte une simulation (116) de variation d'une bande passante du réseau d'interconnexion (18) basée sur la différence de taille prédéterminée des messages échangés lors de la première et de la deuxième exécution (104, 108).

2. Procédé (100) d'analyse de performances d'une application logicielle selon la revendication 1, dans lequel la deuxième exécution (108) de l'application logicielle par la grappe de serveurs (10) ne se distingue de la première exécution (104) que par la taille des messages échangés selon le protocole prédéterminé.

3. Procédé (100) d'analyse de performances d'une application logicielle selon la revendication 1 ou 2, dans lequel la taille prédéterminée des messages échangés lors de la deuxième exécution (108) diffère de celle des messages échangés lors de la première exécution (104) uniquement par ajout ou suppression de données dans ces messages, dites données de remplissage, inutiles à l'exécution de l'application.

4. Procédé (100) d'analyse de performances d'une application logicielle selon l'une quelconque des revendications 1 à 3, dans lequel la simulation (116) de variation de bande passante du réseau d'interconnexion (18) s'exécute par application de la relation suivante :

$$B_2 = B_1 \cdot \frac{T_1}{T_2},$$

où $T_1$ est la taille prédéterminée des messages échangés selon le protocole prédéterminé lors de la première exécution (104) de l'application logicielle, $T_2$ est la taille prédéterminée des messages échangés selon le protocole prédéterminé lors de la deuxième exécution (108) de l'application logicielle, $B_1$ est une bande passante apparente du réseau d'interconnexion (18) de la grappe de serveurs de référence (10) et $B_2$ est une autre bande passante apparente du même réseau d'interconnexion (18) résultant de la variation de bande passante simulée du réseau d'interconnexion.

5. Procédé (100) d'analyse de performances d'une application logicielle selon l'une quelconque des revendications 1 à 4, dans lequel :

- lors de l'une des première et deuxième exécutions (104, 108) de l'application logicielle, chaque message comporte N octets de données utiles transmises d'un nœud de calcul émetteur à un nœud de calcul destinataire ;
- lors de l'autre des première et deuxième exécutions (104, 108) de l'application logicielle, chaque message comporte N+N' octets de données dont N octets de données utiles transmises d'un nœud de calcul émetteur à un nœud de calcul destinataire et N' octets de données supplémentaires de remplissage transmises selon une couche de communication du protocole prédéterminé de passage de messages mais non fournies au nœud de calcul destinataire et non visible par l'application logicielle en cours d'exécution.

6. Procédé (100) d'analyse de performances d'une application logicielle selon l'une quelconque des revendications 1 à 5, dans lequel la taille prédéterminée des messages est modifiée d'une exécution à l'autre de l'application logicielle par adaptation (202' ; 204') d'un composant logiciel de la couche de communication (202', 202, 204 ; 202, 204') du protocole prédéterminé de passage de messages, cette couche de communication étant destinée à être appelée lors de chaque exécution de l'application logicielle chaque fois qu'un message doit être envoyé dans le réseau d'interconnexion (18).

7. Procédé (100) d'analyse de performances d'une application logicielle selon la revendication 6, dans lequel la taille prédéterminée des messages est modifiée d'une exécution à l'autre de l'application logicielle par insertion d'un appel à une bibliothèque logicielle d'encapsulation de service de passage de messages (202') dédiée à cette modification de taille chaque fois que l'exécution de l'application logicielle implique un appel de primitive de demande d'envoi de message (202) de la couche de communication (202', 202, 204) du protocole prédéterminé de passage de messages, l'appel de primitive étant alors réalisé par la bibliothèque logicielle d'encapsulation (202') appelée.

8. Procédé (100) d'analyse de performances d'une application logicielle selon la revendication 6, dans lequel la taille prédéterminée des messages est modifiée d'une exécution à l'autre de l'application logicielle par programmation de cette modification dans au moins une bibliothèque logicielle (204') d'interfaçage avec au moins un pilote (206, 208) du réseau d'interconnexion (18), ladite bibliothèque logicielle d'interfaçage étant (204') appelée par une primitive de demande d'envoi de message (202) de la couche de communication (202, 204') du protocole prédéterminé de passage de messages elle-même appelée par l'exécution de l'application logicielle chaque fois qu'un message doit être envoyé.

9. Procédé (100) d'analyse de performances d'une application logicielle selon l'une quelconque des revendications 1 à 8, dans lequel le protocole prédéterminé de passage de messages est un protocole de type MPI.

10. Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé (100) d'analyse de performances d'une application logicielle selon l'une quelconque des revendications 1 à 9, lorsque ledit programme est exécuté sur un ordinateur (22).

## Patentansprüche

1. Leistungsanalyse-Verfahren (100) einer Software-Anwendung durch ihre parallele Ausführung auf mehreren Berechnungsknoten (12) einer Referenz-Serverfarm (10), umfassend darüber hinaus mehrere Speicherknoten (16) und wenigstens ein Zusammenschaltnetz der Berechnungs- (12) und Speicherknoten (16) untereinander für den Nachrichtenaustausch gemäß einem vorbestimmten Nachrichtendurchgangsprotokoll, wobei das Verfahren umfasst:

   - eine erste Ausführung (104) der Software-Anwendung durch die Serverfarm (10), was den Austausch von für ihre Ausführung nützlichen Daten zwischen den Berechnungs- (12) und Speicherknoten (16) der Serverfarm (10) impliziert, die von dem Zusammenschalt-Netz (18) gemäß dem vorbestimmten Protokoll bei der Verkapselung dieser nützlichen Daten in den Nachrichten realisiert sind, deren Größe vorbestimmt wird,
   - eine zweite Ausführung (108) der Software-Anwendung durch die Serverfarm (10), die denselben Austausch nützlicher Daten zwischen denselben Berechnungs- (12) und Speicherknoten (16) der Serverfarm (10) impliziert, die von demselben Zusammenschalt-Netz (18) gemäß demselben vorbestimmten Protokoll realisiert werden,
   - eine Extrapolation (114) der Leistungen der Software-Anwendung auf der Grundlage wenigstens einer dieser zwei Ausführungen:

   **dadurch gekennzeichnet, dass**:

   - die vorbestimmte Größe der bei der zweiten Ausführung (108) ausgetauschten Nachrichten von der der bei der ersten Ausführung (104) ausgetauschten Nachrichten abweicht, während die ausgetauschten nützlichen Daten dieselben sind; und
   - die Extrapolation (114) der Leistungen der Software-Anwendun eine Variationssimulation (116) einer Bandbreite des Zusammenschalt-Netzes (18) umfasst, die auf der vorbestimmten Größendifferenz der bei der ersten und der zweiten Ausführung (104, 108) auf Grund von Nachrichten ausgetauscht werden.

2. Leistungsanalyse-Verfahren (100) einer Software-Anwendung gemäß Anspruch 1, bei dem die zweite Ausführung (108) der Software-Anwendung durch die Serverfarm (10) sich von der ersten Ausführung (104) nur durch die Größe der gemäß dem vorbestimmten Protokoll ausgetauschten Nachrichten unterscheidet.

3. Leistungsanalyse-Verfahren (100) einer Software-Anwendung gemäß Anspruch 1 oder 2, bei dem die vorbestimmte Größe der bei der zweiten Ausführung (108) ausgetauschten Nachrichten sich von der der bei der ersten Ausführung (104) ausschließlich durch das Hinzufügen oder Löschen von Daten, bezeichnet als für die Ausführung der Anwendung nutzlose Fülldaten, in diesen Nachrichten unterscheidet.

4. Leistungsanalyse-Verfahren (100) einer Software-Anwendung gemäß irgendeinem der Ansprüche 1 bis 3, bei dem die Variationssimulation (116) der Bandbreite des Zusammenschalt-Netzes (18) per Anwendung der folgenden Relation ausgeführt wird:

$$B_2 = B_1 \cdot \frac{T_1}{T_2},$$

wobei $T_1$ die vorbestimmte Größe der gemäß dem vorbestimmten Protokoll bei der ersten Ausführung (104) der Software-Anwendung ausgetauschten Nachrichten ist, $T_2$ die vorbestimmte Größe der gemäß dem vorbestimmten Protokoll bei der zweiten Ausführung (108) der Software-Anwendung ausgetauschten Nachrichten ist, $B_1$ eine offensichtliche Bandbreite des Zusammenschalt-Netzes (18) der Referenz-Serverfarm (10) ist und $B_2$ eine andere offensichtliche Bandbreite desselben Zusammenschalt-Netzes (18) ist, die sich aus der simulierten Bandbreitenvariation des Verbindungsnetzwerks ergibt.

5. Leistungsanalyse-Verfahren (100) einer Software-Anwendung gemäß irgendeinem der Ansprüche 1 bis 4, bei dem:

   - bei einer der ersten und zweiten Ausführung (104, 108) der Software-Anwendung jede Nachricht N Bytes nützliche Daten umfasst, die von einem Sender-Berechnungsknoten zu einem Empfänger-Berechnungsknoten übertragen werden;
   - bei der anderen der ersten und zweiten Ausführung (104, 108) der Software-Anwendung jede Nachricht N+N' Bytes Daten umfasst, von denen N Bytes nützlicher Daten von einem Sender-Berechnungsknoten auf einen Empfänger-Berechnungskosten übertragen werden und N' zusätzliche Fülldaten-Bytes gemäß einer Kommunikationsschicht des vorbestimmten Nachrichtendurchgangsprotokolls übertragen werden, aber dem Empfänger-Berechnungsknoten nicht geliefert werden und von der Software-Anwendung im Ausführungsverlauf nicht sichtbar sind.

6. Leistungsanalyse-Verfahren (100) einer Software-Anwendung gemäß irgendeinem der Ansprüche 1 bis 5, bei dem die vorbestimmte Größe der Nachrichten von einer Ausführung der Software-Anwendung zur anderen per Anpassung (202'; 204') einer Softwarekomponente der Kommunikationsschicht (202'; 202, 204; 202, 204') des vorbestimmten Nachrichtendurchgangsprotokolls modifiziert wird, wobei diese Kommunikationsschicht dazu bestimmt ist, bei jeder Ausführung der Software-Anwendung jedes Mal dann aufgerufen zu werden, wenn eine Nachricht in das Zusammenschalt-Netz (18) geschickt werden soll.

7. Leistungsanalyse-Verfahren (100) einer Software-Anwendung gemäß Anspruch 6, bei dem die vorbestimmte Größe der Nachrichten von einer Ausführung der Software-Anwendung zur anderen durch Einfügen eines Anrufs einer Software-Bibliothek einer Nachrichtendurchgangs-Dienstverkapselung (202') modifiziert wird, die dieser Größenmodifikation dediziert wird, wenn die Ausführung der Software-Anwendung einen Primitivanruf ei-ner Nachrichten-Versandanfrage (202) der Kommunikationsschicht (202', 202, 204) des vorbestimmten Nachrichtendurchgangsprotokolls impliziert, wobei der Primitivanruf dann von der angerufenen Verkapselungs-Softwarebibliothek (202') realisiert wird.

8. Leistungs-Analyseverfahren (100) einer Software-Anwendung gemäß Anspruch 6, bei der die vorbestimmte Größe der Nachrichten von einer Ausführung der Software-Anwendung zur anderen per Programmierung dieser Modifikation in wenigstens einer Schnittstellenbildungs-Softwarebibliothek (204') mit wenigstens einem Piloten (206, 208) des Zusammenschalt-Netzes (18) modifiziert wird, wobei die genannte Schnittstellenbildungs-Softwarebibliothek (204') selbst durch eine Nachrichtenversand-Primitivanfrage (202) der Kommunikationsschicht (202, 204') des vorbestimmten Nachrichtendurchgangsprotokolls angerufen wird, das selbst durch die Ausführung der Software-Anwendung jedes Mal angerufen wird, wenn eine Nachricht versandt werden soll.

9. Leistungsanalyse-Verfahren (100) einer Software-Anwendung gemäß irgendeinem der Ansprüche 1 bis 8, bei dem das vorbestimmte Nachrichtendurchgangsprotokoll ein Protokoll vom Typ MPI ist.

10. Computerprogramm, das von einem Kommunikationsnetz herunterladbar und/oder auf einem per Computer lesbaren Träger gespeichert und/oder von einem Prozessor ausführbar ist, **dadurch gekennzeichnet, dass** es Anwendungen für die Ausführung der Schritte eines Leistungsanalyse-Verfahrens (100) einer Software-Anwendung gemäß irgendeinem der Ansprüche 1 bis 9 umfasst, wenn das genannte Programm auf einem Computer (22) ausgeführt ist.

**Claims**

1. Method (100) for performance analysis of a software application by its parallel execution over several computational nodes (12) of a cluster of reference servers (10) further comprising several storage nodes (16) and at least one interconnection network (18) of the computational (12) and storage (16) nodes between them for the exchange of messages according to a predetermined message passing protocol, the method including:

   - a first execution (104) of the software application by the cluster of servers (10), involving exchanges of useful data at its execution between the computational (12) and storage (16) nodes of the cluster of servers (10) executed by the interconnection network (18) according to the predetermined protocol by encapsulating these useful data in messages of predetermined size;
   - a second execution (108) of the software application by the cluster of servers (10), involving the same exchanges of useful data between the same computational (12) and storage (16) nodes of the cluster of servers (10) executed by the same interconnection network (18) according to the same predetermined protocol;
   - an extrapolation (114) of the software application performance based on at least one of the two executions;

   **characterised in that**:

   - the predetermined size of the messages exchanged during the second execution (108) differs from that of the messages exchanged during the first execution (104) although the useful data exchanged are the same; and
   - the extrapolation (114) of the software application performance comprises a simulation (116) of a variation of a bandwidth of the interconnection network (18) based on the difference in predetermined size of the messages exchanged during the first and the second execution (104, 108).

2. Method (100) for performance analysis of a software application according to claim 1, wherein the second execution (108) of the software application by the cluster of servers (10) is distinguished from the first execution (104) only by the size of the messages exchanged according to the predetermined protocol.

3. Method (100) for performance analysis of a software application according to claim 1 or 2, wherein the predetermined size of the messages exchanged during the second execution (108) differs from that of the messages exchanged during the first execution (104) solely by adding or deleting data in these messages, referred to as filler data, not necessary for the execution of the application.

4. Method (100) for performance analysis of a software application according to any of claims 1 to 3, wherein the simulation (116) of a variation of the bandwidth of the interconnection network (18) is executed by application of the following relationship:

$$B_2 = B_1 \cdot \frac{T_1}{T_2},$$

where $T_1$ is the predetermined size of the messages exchanged according to the predetermined protocol during the first execution (104) of the software application, $T_2$ is the predetermined size of the messages exchanged according to the predetermined protocol during the second execution (108) of the software application, $B_1$ is an apparent bandwidth of the interconnection network (18) of the cluster of reference servers (10) and $B_2$ is another apparent bandwidth of the same interconnection network (18) resulting from the variation of the simulated bandwidth of the interconnection network.

5. Method (100) for performance analysis of a software application according to any of claims 1 to 4, wherein:

- during one of the first and second executions (104, 108) of the software application, each message includes N bytes of useful data transmitted from an emitting computational node to a destination computational node;
- during the other of the first and second executions (104, 108) of the software application, each message includes N+N' bytes of data of which N bytes of useful data transmitted from a emitting computational node to a destination computational node and N' additional bytes of filler data transmitted according to a communication layer of the predetermined message passing protocol but not supplied to the destination computational node and not visible by the software application in the process of execution.

6. Method (100) for performance analysis of a software application according to any of claims 1 to 5, wherein the predetermined size of the messages is modified from one execution to the other of the software application by adaptation (202'; 204') of a software component of the communication layer (202', 202, 204; 202, 204') of the predetermined message passing protocol, this communication layer being intended to be called during each execution of the software application each time that a message has to be sent in the interconnection network (18).

7. Method (100) for performance analysis of a software application according to claim 6, wherein the predetermined size of the messages is modified from one execution to the other of the software application by inserting a call to a software encapsulation library of the message passing service (202') dedicated to this modification in size each time that the execution of the software application involves a primitive call of a message send request (202) of the communication layer (202', 202, 204) of the predetermined message passing protocol, the primitive call then being executed by the called software encapsulation library (202').

8. Method (100) for performance analysis of a software application according to claim 6, wherein the predetermined size of the messages is modified from one execution to the other of the software application by programming this modification in at least one software library (204') for interfacing with at least one pilot (206, 208) of the interconnection network (18), said software interfacing library being (204') called by a message send request primitive (202) of the communication layer (202, 204') of the predetermined message passing protocol itself called by the execution of the software application each time that a message has to be sent.

9. Method (100) for performance analysis of a software application according to any of claims 1 to 8, wherein the predetermined message passing protocol is a protocol of the MPI type.

10. Computer program that can be downloaded from a communication network and/or recorded on a support that can be read by a computer and/or that can be executed by a processor, **characterised in that** it comprises instructions for the execution of the steps of a method (100) for analysing the performance of a software application according to any of claims 1 to 9, when said program is executed on a computer (22).

[Fig. 1]

[Fig. 2]

*100*

| 102 |
|---|

| 106 |
|---|

| 110 |
|---|

| 104 |
|---|

| 108 |
|---|

| 112 |
|---|

| 114 |
|---|
| | 116 | |
| | 118 | |

[Fig. 3]

| 200 |
|---|

| 202 |
|---|

| 204 |
|---|

| 206 | | 208 |
|---|---|---|

[Fig. 4]

```
┌─────────────────────┐
│         200         │
└─────────────────────┘
           ▼
┌─────────────────────┐
│         202'        │
└─────────────────────┘
           ▼
┌─────────────────────┐
│         202         │
└─────────────────────┘
           ▼
┌─────────────────────┐
│         204         │
└─────────────────────┘
     ▼             ▼
┌────────┐    ┌────────┐
│  206   │    │  208   │
└────────┘    └────────┘
```

[Fig. 5]

```
┌─────────────────────┐
│         200         │
└─────────────────────┘
           ▼
┌─────────────────────┐
│         202         │
└─────────────────────┘
           ▼
┌─────────────────────┐
│         204'        │
└─────────────────────┘
     ▼             ▼
┌────────┐    ┌────────┐
│  206   │    │  208   │
└────────┘    └────────┘
```

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KERBYSON D J.** *A Look at Application Performance Sensitivity to the Bandwidth and Latency of Infiniband Networks*
- **MARTIN SCHULZ et al.** *On the Performance of Transparent MPI Piggyback Messages*
- **CARRINGTON et al.** Characterizing large-scale HPC applications through trace extrapolation. *Parallel Processing Letters @World Scientific,* 2013, vol. 23 (4
- **SHARKAWI et al.** SWAPP: a framework for performance projections of HPC applications using benchmarks. *IEEE 26th International Parallel and Distributed Processing Symposium Workshops & PhD Forum (Proceedings of),* 2012